# EUROPEAN PATENT APPLICATION

(11) **EP 2 474 948 A1**
(43) Date of publication of application: **11.07.2012**
(21) Application number: 10813248.1
(22) Date of filing: 07.04.2010
(51) Int. Cl.: G06Q 90/00

(54) **TRACING AND RECALLING SYSTEM FOR MANAGING COMMODITY CIRCULATION BASED ON INTERNET**

(30) Priority: 01.09.2009 CN 200910170559
(71) Applicant: Yu, Zhi, Guangdong 518034 (CN)
(72) Inventor: Yu, Zhi, Guangdong 518034 (CN)
(74) Representative: Plucker, Guy
(86) International application number: PCT/CN2010/071585
(87) International publication number: WO 2011/026326

(57) **Abstract**

A method for managing commodity circulation based on Internet is provided, which includes the following steps: 1. a computer system acquiring a first group of data and a second group of data that are respectively 13-digit decimal numbers to be processed; 2. judging whether the first group of data and the second group of data conform to specified principles; 3. performing an encryption operation on the two groups of data conforming to the specified principles through a commercial cryptographic algorithm to generate a third group of data; 4. making the first group of data, the second group of data, and the third group of data correspond to one commodity; 5. dividing the first group of data, the second group of data, and the third group of data into three rows, and printing them on the corresponding commodity; 6. assigning a corresponding 6-digit tracking code to the commodity; 7. displaying the tracking code through a web page; 8. displaying the first group of data, the second group of data, and other information through the web page, entering the third group of data in an entry window, performing an inverse operation of encryption and a checking computation, and the system displaying an authentication code of "0" or "1" to prompt correct or wrong information.

## Description

### Technical Field

The present invention relates to an application of computer and commercial cryptographic technologies in commodity security supervision by identifying, authenticating, tracking, and recalling a single commodity through computer software and hardware, thereby ensuring the authenticity and reliability of the commodity.

### Related Art

With social development, a variety of commodity anti-counterfeiting technologies, for example, application n° "200410058004.1" entitled "Anti-counterfeiting Query System" and Application No. "200410066857.X" entitled "Combined Anti-counterfeiting Code and Method of Using the Same", have been applied. With the development of computer and information technology, the cryptographic technology has also been rapidly developed, and the applications thereof have been continuously expanded, and currently, socialization and individuation trends have appeared all over the world. For example, the cryptographic technology is applied to value-added tax invoices, which can prevent counterfeiting and falsification, so as to put an end to national tax dodging, smuggling, evasion, and fraud using the value-added tax invoices, and it is quite convenient for tax audit.

Regulation on the Administration Commercial Cipher Codes was issued by the State Council of China on October 7, 1999.

In January 2006, the State Encryption Administration of China approved the Hash Algorithm: SHA-256; and Random Number Generation Algorithm: independent selection.

Food Safety Law was implemented on June 1, 2009, which requires manufacturers to establish systems of tracking and recalling commodities and recording invoice obtaining.

The Optical Character Recognition (OCR) technology has advantages such as rapid input, high reliability, large information collection capacity, and high flexibility and practicability, and has been widely applied.

With the increasingly mature computer network technology, manufacturers and consumers are close to each other, and direct selling has gained popularity, but it is difficult to ensure the authenticity of commodities purchased on line.

The EAN13 barcode is a global universal barcode used to identify commodities in the circulation sector, and the EAN13 barcode has a one-to-many relationship with the commodities. The manufacturer cannot clearly supervise the commodities under circulation, so that the circulation is disordered. The EAN13 barcode is easily counterfeited and forged, which brings a lot of inconveniences to the consumers.

### SUMMARY

In view of the deficiencies of the existing anti-counterfeiting technologies, the objective of the present invention is to make full use of computer network technology and cryptographic technology to solve the technical problem of identifying, authenticating, tracking, and recalling each commodity among the manufacturer, consumer, and supervision organization, so that the circulation is in order, and the consumer can query and verify whether the commodity is genuine or not for many times, thereby protecting the rights and interests of the consumer in a better way.

The objective of the present invention may be achieved through the following technical solution. A method for managing commodity circulation based on Internet is provided, which includes the following steps:
(1) a computer system acquiring a first group of data and a second group of data that are respectively 13-digit decimal numbers to be processed;
(2) the computer system judging whether the first group of data conforms to an international universal EAN13 encoding principle and whether the second group of data conforms to a commodity flow number encoding principle, and if yes, proceeding to a next step; otherwise, giving an error prompt;
(3) the computer system performing an encryption operation on the first group of data conforming to the EAN13 encoding principle and the second group of data conforming to the commodity flow number encoding principle through a commercial cryptographic algorithm to generate a group of 13-digit decimal verification code data, i.e., a third group of data, and storing the three groups of data respectively;
(4) making the first group of data, the second group of data, and the third group of data correspond to one commodity;
(5) the computer system dividing the first group of data, the second group of data, and the third group of data into three rows, and printing them on the corresponding commodity for machine identification;
(6) assigning a corresponding 6-digit zip code to the commodity according to a flow direction of the commodity, and the computer system recording the zip code, i.e., a tracking code, for indicating the flow direction of the commodity;
(7) the computer system displaying the tracking code through a web page; and
(8) the computer system displaying the first group of data, the second group of data, the tracking code, an authentication code, a production date, a delivery date, and an expiration date through the web page, and providing a display window and an entry window for a user's entry, after the user enters the third group of data in the entry window, the computer system performing an inverse operation of encryption on the group of entered data and the first group of data and the second group of data that are stored in a computer and then performing a checking computation, so as to obtain the authentication code, and if the result is zero, displaying the authentication code in the display window as "0" to prompt correct information; otherwise, displaying the authentication code in the display window as "1" to prompt wrong information.

The method for managing commodity circulation based on Internet further includes the following step: when commodities are sold, a seller assigning a 6-digit decimal random number, i.e., a property right code, to each corresponding commodity, the computer system storing the property right code in a memory, and the user obtaining the property right code when purchasing the commodity; the user entering the property right code in the display window, wherein if the display window displays that the property right code is correct, it indicates that the seller has a selling right of the product; after the display window displays that the property right code is correct, the computer system prompting whether to modify the property right code, the user entering a new property right code in the display window, and the computer system updating the property right code stored in the memory.

If products are sold on line, the method further includes the following steps:
(1) the computer system storing first groups of data and second groups of data corresponding to commodities and displaying the first groups of data and the second groups of data through a web page, wherein the web page displays a mark indicating subscription or its absence, if the user selects to purchase a commodity, the user clicking the first group of data and the second group of data that correspond to the selected commodity, an online payment window popping up on the page, after the user finishes a payment procedure, the computer system acknowledging fee collection, and electronic contract information popping up, after the user finishes filling in the contract information, the computer system automatically generating a purchase and sale electronic contract and recording content information of the electronic contract, wherein the information includes an address, a name, contact information, and a zip code of the user, meanwhile locking the selected commodity, and generating a 6-digit decimal random number, i.e., a property right code, corresponding to the commodity; and
(2) the computer system determining a flow direction of the commodity according to the zip code, i.e., a tracking code, in the contract information content, and the commodity entering a logistics system and reaching the user.

The technical advantages of the method for managing commodity circulation based on Internet in the present invention lie in that: it has a plain part and a cipher part, so that the overall process of a product from being produced and sold, purchased by a user, and supervised by the supervision department, to being recalled is clear to the producer, seller, user, and supervisor, and it cannot be easily counterfeited and forged.

### BRIEF DESCRIPTION OF THE DRAWINGS

FIG. 1 shows an EAN13 code, i.e., a first group of data;
FIG. 2 shows a flow number code of a commodity, i.e., a second group of data;
FIG. 3 shows a verification code of the commodity, i.e., a third group of data;
FIG. 4 shows a tracking code of the commodity;
FIG. 5 shows a property right code of the commodity;
FIG. 6 is a comparison view of a CN39 code and an EAN13 barcode;
FIG. 7 shows the manufacturing of the CN39 code;
FIG. 8 shows the identification of the CN39 code;
FIG. 9 shows the comparison of the CN39 code; and
FIG. 10 is a data flow chart of the CN39 code.

### BRIEF DESCRIPTION OF THE DRAWINGS

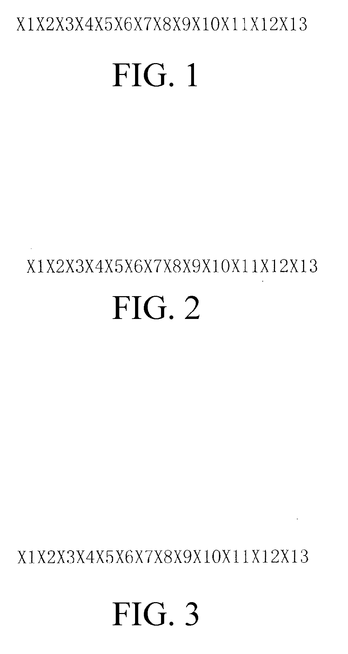

FIG. 1 shows a first group of data, consisting of 13 decimal digits in total and conforming to an encoding principle of an EAN13 code.
FIG. 2 shows a second group of data, consisting of 13 decimal digits in total and conforming to an encoding principle of a flow number.
FIG. 3 shows a third group of data, consisting of 13 decimal digits in total and being generated by encryption through a commercial cryptographic algorithm, i.e., a verification code.

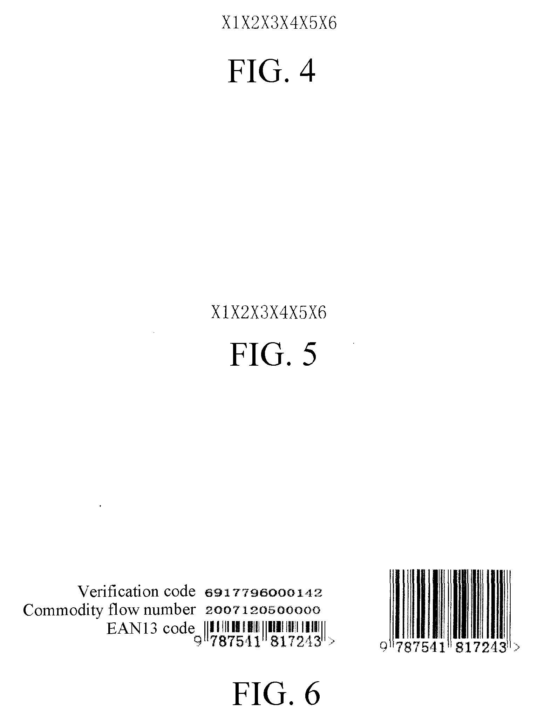

FIG. 4 shows a fourth group of data, consisting of 6 decimal digits in total and conforming to an encoding principle of a zip code, i.e., a tracking code.
FIG. 5 shows a fifth group of data, consisting of 6 decimal digits in total and being generated randomly by the system or input by a consumer, which is a random number, i.e., a property right code.

### DETAILED DESCRIPTION

In a method for managing commodity circulation based on Internet according to the present invention, an encoding principle of a first group of data is an EAN13 encoding principle, an encoding principle of a second group of data, i.e., a commodity flow number encoding principle, is: the 1^{st}-4^{th} digits indicate a 4-digit year code, the 5^{th}-6^{th} digits indicate a 2-digit month code, the 7^{th}-8^{th} digits indicate a 2-digit date code, and the 9^{th}-13^{th} digits indicate a 5-digit commodity flow number code.

After an encryption operation is performed on the first group of data and the second group of data through a commercial cryptographic algorithm, a third group of data that is a 13-digit decimal number, i.e., a verification code, may be obtained.

In the method for managing commodity circulation based on Internet, after the verification code is obtained, a decryption operation is performed through a commercial cryptographic algorithm to obtain a first group of data and a second group of data that are 13-digit decimal numbers, then, a checking computation is performed to obtain authentication code data.

In the method for managing commodity circulation based on Internet, the first group of data, the second group of data, and the third group of data are respectively printed on a commodity in an order of lower, middle, and upper rows by using barcodes, which is defined as a CN39 code.

In the present invention, on the basis of the EAN13 code of a commodity, a commodity flow number code and a commodity verification code are further added. An EAN13 code uniquely identifies one kind of commodities all over the world, a commodity flow number code uniquely identifies one commodity in one kind of commodities, and a commodity verification code is generated by encrypting the EAN13 code and the flow number code through the commercial cryptographic algorithm. After the verification code is obtained, the EAN13 code and the flow number code can be obtained by decryption through the commercial cryptographic algorithm, so as to achieve the purpose of verification. The CN39 code uniquely identifies one commodity all over the world, and the probability of guessing a CN39 code of one commodity is 10⁻¹³, so the error for identifying the commodity by the CN39 code is 10⁻¹³.
I. EAN13 Code of Commodity
   Recently, China is a member of European Article Number (EAN), and managed by the Article Numbering Center, so that the manufacturers can submit an application for using the barcodes. EAN barcodes are divided into EAN13 codes and EAN8 codes, in which the EAN13 codes are generally used on common commodities and the EAN8 codes are used on the commodities with extremely small volume.
   i. EAN13 code encoding principle
      The 1^{st}-3^{rd} digits indicate a country code;
      the 4^{th}-7^{th} digits indicate a manufacturer code;
      the 8^{th}-12^{th} digits indicate a commodity code; and
      the 13^{th} digit indicates a check code.
      The first three digits are universally allocated all over the world, and China is marked as 690-695.
      If the code begins with 690 or 691, the 4^{th}-7^{th} digits indicate the manufacturer code, and the 8^{th}-12^{th} digits indicate the commodity code.
      If it begins with 692-695, the 4^{th}-8^{th} digits indicate the manufacturer code, and the 9^{th}-12^{th} digits indicate the commodity code.
      The last digit is a check code.
   ii. Code of book category
      1. EAN13 code
         The 1^{st}-3^{rd} digits indicate a code of a book category 978;
         the 4^{th}-12^{th} digits indicate the first 9 digits of the former ISBN code; and
         the 13^{th} digit is a check code.
      2. ISBN code
         The 1^{st}-3^{rd} digits indicate a region code;
         the 4^{th}-5^{th} digits indicate a code of a publishing house;
         the 6^{th}-9^{tn} digits indicate a code of a publication; and
         the 10^{th} digit is a check code.
      3. Corresponding relationship between ISBN code and EAN13 code
         978 + the first 9 digits of ISBN + EAN check code
   iii. Code of periodical category
      1. EAN13 code
         The 1^{st}-3^{rd} digits indicate a code of a periodical 977;
         the 4^{th}-10^{th} digits are the first 7 codes of the former IASN code;
         the 11^{th}-12^{th d}igits are 00; and
         the 13^{th} digit is a check code.
      2. ISSN code
         The 1^{st}-7^{th} digits indicate an international standard serial number; and
         the 8^{th} digit indicates a check code
      3. Corresponding relationship between ISSN code and EAN13 code
         977 + the first 7 digits of ISSN + 00 + EAN check code
         (International Standard Serial Number)
   iv. Relationship between EAN8 code and EAN13 code
      1. EAN8 code encoding principle
         The 1^{st}-3^{rd} digits indicate a country code;
         the 4^{th}-7^{th} digits indicate a manufacturer code; and
         the 8^{th} digit is a check code.
      2. Conversion from EAN8 code to EAN13 code
         Reserving: the 1^{st}-3^{rd} digits indicate the country code; and the 4^{th}-7^{th} digits indicate the manufacturer code.
         Adding: the 8^{th}-12^{th} digits are 00000; and
         the 13^{th} digit is the EAN13 check code.
      3. Relationship between EAN8 code and EAN13 code
         the first 7 digits of EAN8 + 00000 + EAN13 check code
   v. Relationship between EAN13 code and UPC code

   When entering to the USA and Canada, the commodities need to apply for UPC code, which is compatible with the EAN13 code.
II. Flow Number Code of Commodity
   1. If the daily yield of the commodities is not more than 100 thousand,
      the 1^{st}-4^{th} digits indicate a 4-digit year code (e.g., 2009),
      the 5^{th}-6^{th} digits indicate a 2-digit month code (e.g., 06),
      the 7^{th}-8^{th} digits indicate a 2-digit date code (e.g., 01), and
      the 9^{th}-13^{th} digits indicate a 5-digit commodity flow number code (e.g., 00000-99999).
   2. If the daily yield of the commodities is not more than 1 million,
      the 1^{st}-3^{rd} digits indicate a 3-digit year code (e.g., the year of 2009 is marked as 009), the 4^{th}-5^{th} digits indicate a 2-digit month code (e.g., 06),
      the 6^{th}-7^{th} digits indicate a 2-digit date code (e.g., 01), and
      the 8^{th}-13^{th} digits indicate a 6-digit commodity flow number code (e.g., 000000-999999).
   3. If the daily yield of the commodities is not more than 10 million,
      the 1^{st}-2^{nd} digits indicate a 2-digit year code (e.g., the year of 2009 is marked as 09), the 3^{rd}-4^{th} digits indicate a 2-digit month code (e.g., 06),
      the 5^{th}-6^{th} digits indicate a 2-digit date code (e.g., 01), and
      the 7^{th}-13^{th} digits indicate a 7-digit commodity flow number code (e.g., 0000000-9999999).
   4. If the daily yield of the commodities is not more than 100 million,
      the 1^{st}-2^{nd} digits indicate a 2-digit year code (e.g., the year of 2009 is marked as 09),
      the 3^{rd}-5^{th} digits indicate a 3-digit date code (e.g., 365), and
      the 6^{th}-13^{th} digits indicate a 8-digit commodity flow number code (e.g., 00000000-99999999).
III. Verification Code
   The verification code is a 13-digit decimal number generated by encrypting the first group of EAN13 code and the second group of flow number code through the commercial cryptographic algorithm, which is unique and random.
   The CN39 code is obtained by respectively arranging the above three groups of data in the lower, middle, and upper rows. The CN39 code uniquely identifies one commodity worldwide, which can be used to identify and discriminate the commodities by means of encryption and decryption through the commercial cryptographic algorithm for verification.
   The CN39 code is printed on the commodity in the form of three rows by taking the EAN13 barcode as data carrier, for identifying a commodity.
IV. The CN39 Code Manufactured According to the Above Steps has the Following Advantages.
   The CN39 code is formed by two groups of plain texts and one group of cipher text. The security and reliability of the CN39 code is based on the confidentiality of cryptographic algorithm and cipher key, so the disclosure of the cipher text does not affect the security of the cryptographic algorithm. The possibility for breaking the cryptographic algorithm is considered as not existed herein.
   The CN39 code is formed by 39 decimal digits, and the variance thereof is 10³⁹, which ensures that each commodity has a unique CN39 code. The CN39 code is formed by three groups of 13-digit decimal numbers, in which 26 digits are the plain text, and 13 digits are the verification code, i.e., the cipher text. Therefore, the probability for guessing the CN39 code is 10⁻¹³, and it is apparently a small probability event, even though it is successfully guessed, it does not cause any threats to the other CN39 codes.
   A three-party authentication mechanism is established, in which the authentication center owns the cryptographic algorithm and the cipher key, the manufacturer owns the CN39 code, and the consumer owns the commodity. The consumer logs in the manufacturer's website to query whether the commodity is genuine or not according to the CN39 code on the commodity. If the CN39 code is consistent with that held by the manufacturer, the manufacturer gives a prompt about a certain state of the commodity with this CN39 code at a certain time and a certain place. Then, the consumer determines whether the CN39 code is true or not according to the prompt, and if it is inconsistent with the prompt, the commodity is immediately recalled and the CN39 code is abolished. If the plain text is inconsistent, the manufacturer determines: the commodity is fake. If the verification code is inconsistent, the authentication center determines whether it is true or not: the one with the consistent verification code is true; otherwise, it is false.
   The CN39 code has a small volume (3 cm*3 cm), and large information (10³⁹), and can be visualized.
V. Application of the CN39 Code
   1. The CN39 code is used to prevent fake commodities, without causing an additional research and development cost for the manufacturers and consumers, or requiring a specific device to assist in reading and writing operations. The CN39 code is environmental-protective and cost-effective, which is an exploration of anti-counterfeiting technology from confidentiality to public disclosure, and is also an application of the cryptographic technology in the anti-counterfeiting field. Currently, the existing anti-counterfeiting measures mainly include ink anti-counterfeiting, stamp ink anti-counterfeiting, barcode anti-counterfeiting, watermark anti-counterfeiting, structural anti-counterfeiting, holographic anti-counterfeiting, and nuclear double card anti-counterfeiting technologies, which achieve the anti-counterfeiting function to a certain extent. However, the recognition and verification of some anti-counterfeiting marks must be assisted by specific devices, so that the consumers cannot perform the verification independently. In addition, the illegal use of the anti-counterfeiting marks may result in huge loss for the society, so the anti-counterfeiting measures cannot achieve better unification between efficiency and operability.
   2. The CN39 code is applied to enterprise management, to provide a digital platform satisfying the international standard for the digital management of each commodity by the manufacturer. The CN39 code has a one-to-one association with the commodities, so that the manufacturer establishes a commodity tracking system and creates a tracking file for each commodity. Therefore, the manufacturer can supervise an overall circulation process of each commodity from being produced to reaching the final consumer, so as to provide the most accurate digital information and obtain the most precious time for the recall of commodities, thereby ensuring the legal rights of the consumers in a better way.
   3. The commodity (CN39 code) tracking system established by the manufacturer is quite convenient for the tax audit. The circulation links are reduced, and the commodity directly reaches the consumer from the manufacturer, so as to greatly reduce the circulation cost.
   4. A tracking code records a flow direction of a commodity, thereby preventing inventory transshipment.
   5. A property right ownership code records the ownership right, i.e., the selling right, of a commodity.
VI. Establish a Commodity Information Encryption and Decryption Operation System, a Commodity Tracking and Recall System, a Commodity Query and Authentication System, and a Computer Data Processing Center.

The computer data processing center has the functions of encryption, decryption, encoding, decoding, network transmission, data query, data comparison, etc. An EAN13 3 code database, a CN39 code database, and a commercial cipher database are established, in which the commercial cipher database is used to manage the cipher key and the commercial cryptographic algorithm, so as to ensure the security thereof.

The data processing center collects EAN13 code data and flow number code data of the commodities, and initializes the database. The data of the database is encrypted through the commercial cryptographic algorithm, so as to generate a commodity verification code of 13-digit decimal number, and then store the verification code into the corresponding CN39 code database. The above three groups of data are printed according to an order of lower, middle, and upper rows in the form of EAN13 barcode, so as to obtain the "CN39 code". Each commodity is authenticated by one CN39 code. The consumer reads the CN39 code of a certain commodity by using a code-reading device, and transmits the CN39 code to the data processing center over network. Then, the data processing center decodes the CN39 code, converts the CN39 code into three groups of 13-digit decimal numbers, and then decrypts the three groups of 13-digit decimal numbers through the commercial cryptographic algorithm, so as to perform the authentication on the validity of the CN39 code. If it is valid, the EAN13 code and the flow number code, i.e., the commodity digital authentication plain code, are generated, and then the EAN13 code and the flow number code are compared with those in the initialized database, and the comparison result is provided to the user who makes the query; and if it is invalid, the commodity is a fake. When it is valid, a prompt about a certain state of the commodity at a certain time and a certain place is given, and the consumer determines whether the CN39 code is true or not, and if the CN39 code is inconsistent with the prompt, the commodity is immediately recalled and the CN39 code is abolished.

The commodity tracking and recall system: the manufacturer establishes a tracking and recall system of commodities from the production to reaching the consumers through circulation, so as to create the tracking file for each commodity.

The commodity query and authentication system: displaying commodity information on a web page and providing an information display window and an information entry window for self-checking of consumers and public supervision, and accepting various complaints. The query and authentication system provides various query manners, including fixed-line phone, network, POS system, and mobile phone, which is simply operated and conveniently and quickly used. The consumer can perform the verification independently, and can perform the verification for many times.

The present invention is further illustrated with reference to the accompanying drawings and embodiments.

### 1. Applying for cryptographic algorithm

The required commercial cryptographic algorithm, for example, the hash algorithm and the random number generation algorithm, is examined and approved according to Regulation on the Administration Commercial Cipher Codes.

### 2. Schematic view of CN39 code and EAN13 barcode (see FIG. 6)

The CN39 code is formed by the EAN13 code, flow number code, and verification code of the commodity, which are respectively the upper, middle, and lower groups of data.

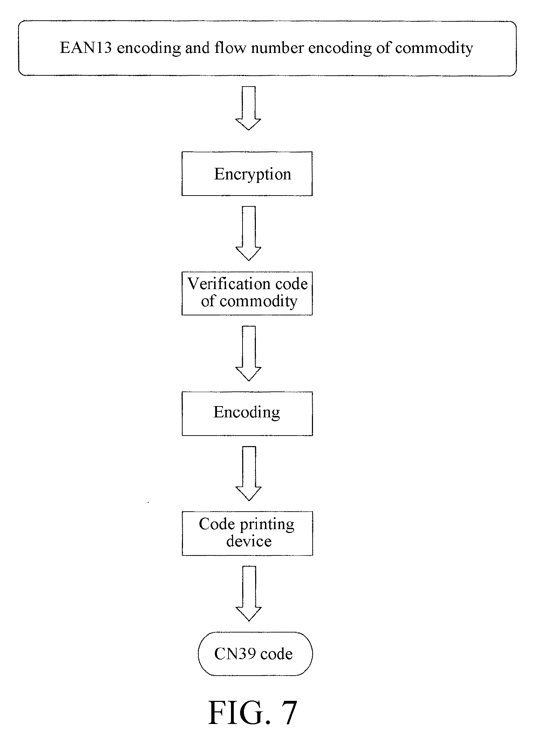

### 3. Manufacturing of CN39 code (see FIG. 7)

(1) Initialization: the data processing center collects the EAN13 code and the flow number code of the commodity, and initializes the database.
(2) Encryption: the data in the database is encrypted through the cryptographic algorithm, so as to generate a commodity verification code of 13-digit decimal number and store the commodity verification code into the corresponding cipher database.
(3) Encoding: the EAN13 code, flow number code, and verification code of the commodity are divided into three groups of 13-digit decimal numbers and then they are stored into the CN39 code database.
(4) Code printing: the barcode is printed according to an order of lower, middle, and upper rows by taking the EAN13 barcode as data carrier, so that the "CN39 code" is obtained.

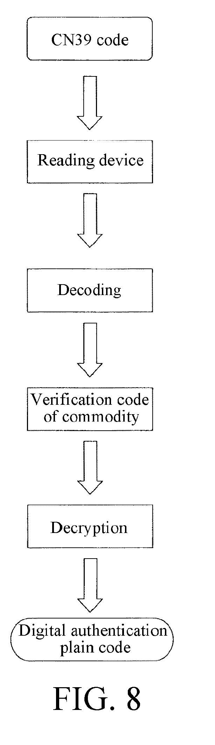

### 4. Identification of CN39 code (see FIG. 8):

(1) Reading code: the consumer reads the CN39 code through the code-reading device, and transmits the CN39 code to the data processing center over network.
(2) Decoding: the data processing center decodes the CN39 code, converts the CN39 code into three groups of 13-digit decimal numbers, and stores the verification code into the cipher database.
(3) Decryption: the data processing center decrypts the verification code through the commercial cryptographic algorithm and generates two groups of 13-digit decimal numbers, i.e., a digital authentication plain code.

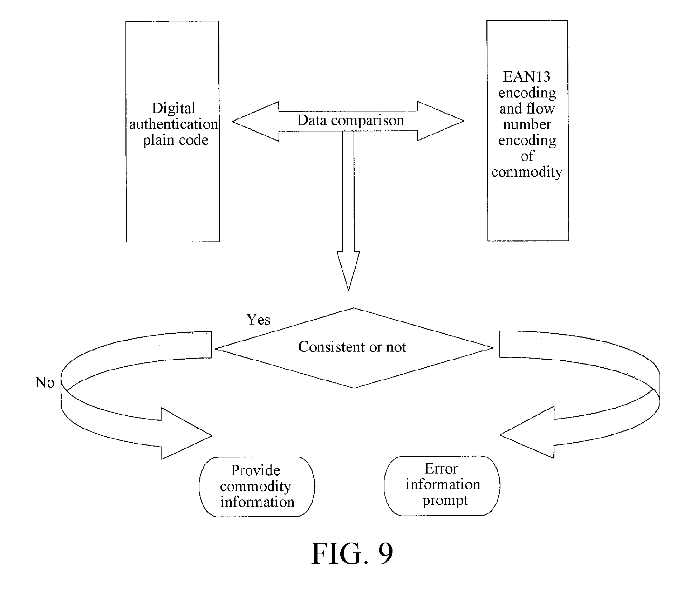

### 5. Comparison of CN39 code (see FIG. 9)

(1) The data processing center compares the commodity digital authentication plain code with the EAN13 code and the flow number code of the commodity in the initialized database.
(2) The comparison result is fed back, and if the commodity digital authentication plain code is consistent with the EAN13 code and the flow number code of the commodity in the initialized database, a prompt about a certain state of the commodity at a certain time and certain place is given; otherwise, a prompt that the commodity is fake or other error information is given.

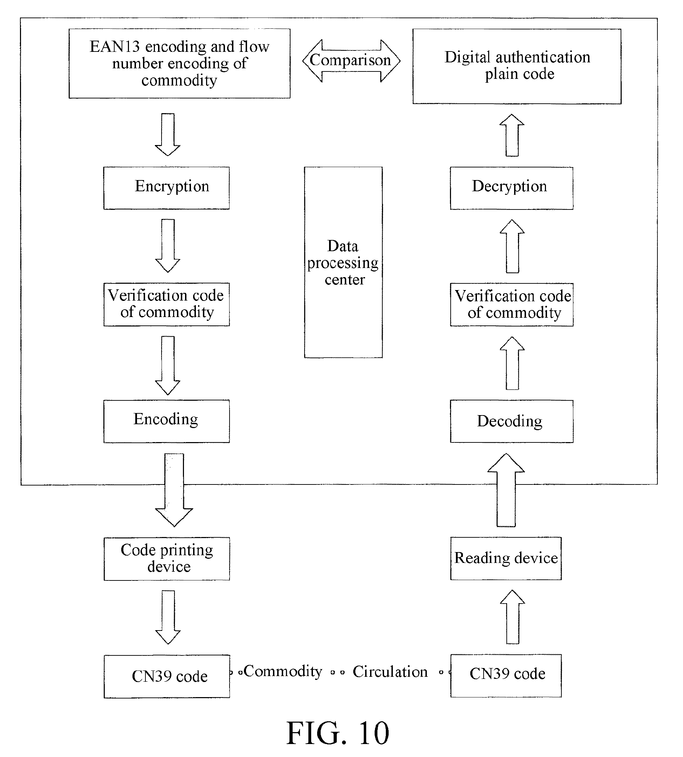

### 6. Data flow chart of CN39 code (see FIG. 10)

(1) The data processing center is established, which has functions of encryption, decryption, encoding, decoding, network transmission, data query, data comparison, etc.
(2) The data processing center collects the EAN13 code and the flow number code of the commodity, which are two groups of 13-digit decimal data, and generates a group of 13-digit decimal data by encrypting the above two groups of 13-digit decimal data. The three groups of data are stored into the CN39 code database. The computer prints the CN39 code on the commodity. The CN39 code is circulated along with the commodity. The user who makes a query reads the decimal data of the CN39 code, or reads the EAN13 barcode data of the CN39 code, and then transmits the data to the data processing center. The commodity verification code is decrypted to generate the EAN13 code and the flow number of the commodity, which are two groups of decimal data, and they are stored into the digital authentication plain code database. The digital authentication plain code database is compared with the initialized database, and the comparison result is fed back to the user.
(3) The commodity tracking and recall system records the overall circulation process of each commodity from production to reaching the consumer, and the questionable commodity is immediately recalled and the CN39 code is abolished. The tracking code records a flow direction of the commodity, thereby preventing inventory transshipment.
(4) The commodity query and authentication system publishes related information of all commodities on the website for self-checking of consumers and public supervision, accepts complaints, and feeds complaint information back to the department concerned.

## Claims

1. A method for managing commodity circulation based on Internet, comprising:
(1) a computer system acquiring a first group of data and a second group of data that are respectively 13-digit decimal numbers to be processed;
(2) the computer system judging whether the first group of data conforms to an international universal EAN13 encoding principle and whether the second group of data conforms to a commodity flow number encoding principle, and if yes, proceeding to a next step; otherwise, giving an error prompt;
(3) the computer system performing an encryption operation on the first group of data conforming to the EAN13 encoding principle and the second group of data conforming to the commodity flow number encoding principle through a commercial cryptographic algorithm to generate a group of 13-digit decimal verification code data, i.e., a third group of data, and storing the three groups of data respectively;
(4) making the first group of data, the second group of data, and the third group of data correspond to one commodity;
(5) the computer system dividing the first group of data, the second group of data, and the third group of data into three rows, and printing them on the corresponding commodity for machine identification;
(6) assigning a corresponding 6-digit zip code to the commodity according to a flow direction of the commodity, and the computer system recording the zip code, i.e., a tracking code, for indicating the flow direction of the commodity;
(7) the computer system displaying the tracking code through a web page; and
(8) the computer system displaying the first group of data, the second group of data, the tracking code, an authentication code, a production date, a delivery date, and an expiration date through the web page, and providing a display window and an entry window for a user's entry, after the user enters the third group of data in the entry window, the computer system performing an inverse operation of encryption on the group of entered data and the first group of data and the second group of data that are stored in a computer and then performing a checking computation, so as to obtain the authentication code, and if the result is zero, displaying the authentication code in the display window as "0" to prompt correct information; otherwise, displaying the authentication code in the display window as "1" to prompt wrong information.

2. The method for managing commodity circulation based on Internet according to claim 1, further comprising: when commodities are sold, a seller assigning a 6-digit decimal random number, i.e., a property right code, to each corresponding commodity, the computer system storing the property right code in a memory, and the user obtaining the property right code when purchasing the commodity; the user entering the property right code in the display window, wherein if the display window displays that the property right code is correct, it indicates that the seller has a selling right of the product; after the display window displays that the property right code is correct, the computer system prompting whether to modify the property right code, the user entering a new property right code in the display window, and the computer system updating the property right code stored in the memory.

3. The method for managing commodity circulation based on Internet according to claim 1 or 2, wherein if products are sold on line, the method further comprises:
(1) the computer system storing first groups of data and second groups of data corresponding to commodities and displaying the first groups of data and the second groups of data through a web page, wherein the web page displays a mark indicating subscription or its absence, if the user selects to purchase a commodity, the user clicking the first group of data and the second group of data that correspond to the selected commodity, an online payment window popping up on the page, after the user finishes a payment procedure, the computer system acknowledging fee collection, and electronic contract information popping up, after the user finishes filling in the contract information, the computer system automatically generating a purchase and sale electronic contract and recording content information of the electronic contract, wherein the information comprises an address, a name, contact information, and a zip code of the user, meanwhile locking the selected commodity, and generating a 6-digit decimal random number, i.e., a property right code, corresponding to the commodity; and
(2) the computer system determining a flow direction of the commodity according to the zip code, i.e., a tracking code, in the contract information content, and the commodity entering a logistics system and reaching the user.
